# EUROPÄISCHE PATENTSCHRIFT

(11) **EP 1 153 452 B1**
(45) Veröffentlichungstag und Bekanntmachung des Hinweises auf die Patenterteilung: **02.04.2003**
(21) Anmeldenummer: 00903536.1
(22) Anmeldetag: 18.01.2000
(51) Int. Cl.: H01M 8/04

(54) **VORRICHTUNG UND VERFAHREN ZUR LEISTUNGSREGELUNG EINES BRENNSTOFFZELLENSTACKS**
DEVICE AND METHOD FOR CONTROLLING THE OUTPUT OF A FUEL CELL STACK
DISPOSITIF ET PROCEDE POUR REGULER LA PUISSANCE D'UN EMPILEMENT DE PILES A COMBUSTIBLE

(30) Priorität: 28.01.1999 DE 19903356; 09.03.1999 DE 29904328 U
(43) Veröffentlichungstag der Anmeldung: 14.11.2001
(73) Patentinhaber: SIEMENS AKTIENGESELLSCHAFT, 80333 München (DE)
(72) Erfinder: BRÜCKNER, Dieter, D-93049 Regensburg (DE)
(86) Internationale Anmeldenummer: DE0000153
(87) Internationale Veröffentlichungsnummer: WO00045455

(56) Entgegenhaltungen:
- EP-A- 0 595 503
- EP-A- 0 828 303
- PATENT ABSTRACTS OF JAPAN vol. 009, no. 004 (E-288), 10. Januar 1985 (1985-01-10) & JP 59 154775 A (TOSHIBA KK), 3. September 1984 (1984-09-03)
- PATENT ABSTRACTS OF JAPAN vol. 016, no. 441 (E-1264), 14. September 1992 (1992-09-14) & JP 04 155769 A (NIPPON TELEGR & TELEPH CORP), 28. Mai 1992 (1992-05-28)

## Beschreibung

Die Erfindung bezieht sich auf ein Verfahren zur Leistungsregelung eines Brennstoffzellenstacks gemäß dem Oberbegriff des Patentanspruches 1. Daneben bezieht sich die Erfindung auch auf die zugehörige Vorrichtung zur Durchführung des Verfahrens gemäß dem Oberbegriff des Patentanspruches. Das Verfahren und die Vorrichtung sollen insbesondere zur Leistungsregelung der Antriebseinheit eines Elektrofahrzeuges verwendet werden.

Es ist ein System zur Leistungsregelung eines Brennstoffzellenstacks bekannt, bei dem die Zellspannung der letzten Brennstoffzelle je nach Bedarf angepaßt wird. Bei diesem System ist nachteilig, daß die Zellspannung der Mehrzahl der Zellen unberücksichtigt bleibt. Weiterhin ist bekannt, die Leistung der Brennstoffzelle über die Regelung der dem System zugeführten Luftmenge zu steuern. Nachteilig ist bei diesem System, daß nicht der Reaktand, also z.B. der Sauerstoff, sondern die Luft, die Sauerstoff in verschiedenen Konzentrationen enthalten kann, eingestellt wird. Dabei kann es vorkommen, daß trotz Drosselung der Luftzufuhr die abgegebene Brennstoffzellenleistung unverändert bleibt, weil zufällig der Sauerstoff-Partialdruck der Luft und der Drosselstelle gleichzeitig gestiegen ist.

Aus der EP 0 828 303 A2 ist ein brennstoffzellenbetriebenes Generatorsystem für Strom bekannt, bei dem Brennstoffzellenstacks verwendet werden, denen Prozeßgas zugeführt wird, wobei zur Einstellung einer gewünschten Leistung und Abweichung von der Leistungsvorgabe im wesentlichen geprüft wird, ob der Katalysator der Brennstoffzellen vergiftet ist. Dazu werden unter anderem auch die Temperatur und der Druck der zugeführten Prozeßgase erfaßt und ausgeregelt. Weiterhin ist in der EP 0 595 503 A1 ein Verfahren zum Betreiben einer Feststoff-Oxid-Brennstoffzellenanlage (Solid Oxide Fuel Cell = SOFC) beschrieben, bei dem im wesentlichen die Temperaturführung an den eingestellten Bedingungen abhängig ist.

Ausgehend vom Stand der Technik ist es Aufgabe der Erfindung, ein Verfahren zur Regelung der von einem Brennstoffzellenstack abgegebenen Leistung anzugeben und eine zugehörige Vorrichtung zu schaffen.

Die Aufgabe ist erfindungsgemäß bei einem Verfahren der eingangs genannten Art durch die Gesamtheit der Maßnahmen des Patentanspruches 1 gelöst. Eine zugehörige Vorrichtung ist im Patentanspruch 2 und eine spezifische Verwendung im Patentanspruch 4 angegeben. Jeweilige Weiterbildungen sind Gegenstand der abhängigen Ansprüche.

Gegenstand der Erfindung ist ein Verfahren zur Leistungsregelung eines Brennstoffzellenstacks, bei dem der Sauerstoffpartialdruck in der Kathodenabluft gemessen und als Referenzgröße für die Einstellung des zuzuführenden Prozeßgasmassenstroms dient. Dabei wird über eine Steuereinheit die Leistungsvorgabe mit der tatsächlich abgegebenen Leistung des Brennstoffzellenstacks und berücksichtigt den im Abgas noch vorhandenen Sauerstoffpartialdruck bei der Einstellung des Luftmassenstroms. Bei der zugehörigen Vorrichtung ist zur Messung des Sauerstoffpartialdruckes der Kathodenabluft die Sonde in der Kathodenabgasleitung angeordnet. Der Meßwert wird an die Steuereinheit weitergeleitet und dient als Referenzgröße für die Einstellung des dem Brennstoffzellenstack zuzuführenden Luftmassenstroms.

Nach einer vorteilhaften Ausgestaltung der Erfindung stehen der elektronischen Steuereinheit noch weitere Daten, wie der Umgebungsdruck und die Außentemperatur der Anlage, zur Verfügung, durch die die Bemessung des zuzuführenden Luftmassenstroms präzisiert wird.

Als Prozeßgas wird im vorliegenden Zusammenhang das befeuchtete und komprimierte Gas-Flüssigkeitsgemisch bezeichnet, das in den Brennstoffzellenstack zur Umsetzung eingeleitet wird. Ein Beispiel für ein Prozeßgas ist befeuchtete Luft, es kann sich aber auch um reinen Sauerstoff oder reinen Wasserstoff, ebenso wie ein Wasser/Methanol-Gemisch handeln. Bevorzugt wird als kathodenseitiges Prozeßgas, dessen Massenstrom über die elektronische Steuereinheit eingestellt wird, Luft eingesetzt.

Als Reaktionsgas wird das Gas bezeichnet, das in der Brennstoffzelle aktiv umgesetzt wird. Bevorzugt handelt es sich dabei um reinen Sauerstoff, reinen Wasserstoff oder reines Methanol, je nach Typ an PEM-Brennstoffzelle. Das Reaktionsgas hat keinen Anteil an Inertgas und/oder Wasserdampf. Die Sonde mißt daher auch nur den Partialdruck eines Gases im Gas-Flüssigkeitsgemisch des Abgases aus der Brennstoffzelle.

Im folgenden wird eine Ausgestaltung der Erfindung anhand eines schematischen Schaltplanes erläutert.

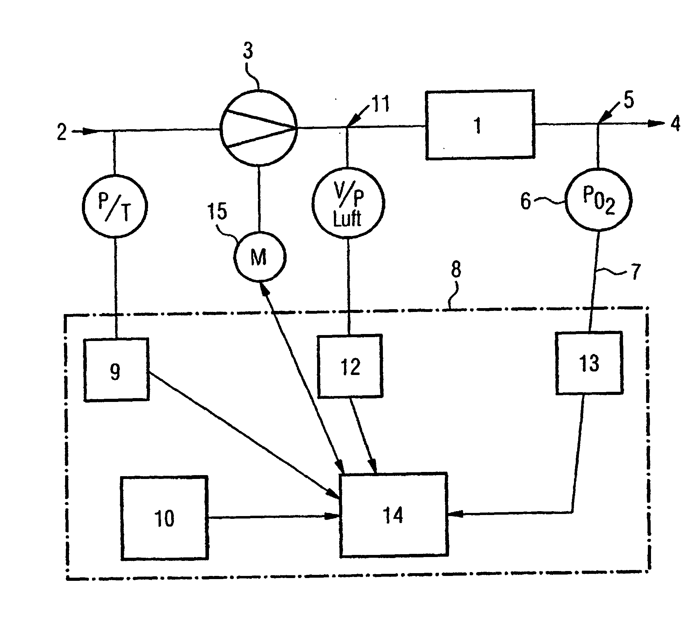

In der Figur ist eine Antriebseinheit eines elektrischen Fahrzeugs zu sehen. Gezeigt ist der Brennstoffzellenstack 1 mit einer Prozeßgaszuführleitung 2, z.B. der Oxidanszuführleitung, in der der Luftmassenstrom fließt. Die ProzeßgasZuführleitung 2 führt durch einen Verdichter 3, vor das Prozeßgas in den Brennstoffzellenstack 1 geleitet wird. Zwischen dem Verdichter 3 und dem Stack 1 an der Stelle 11 der Prozeßgaszuführleitung 2 wird der momentan zugeführte Prozeßgasmassenstrom, der über die Steuerelektronik 8 einstellbar ist, gemessen. Rechts vom Brennstoffzellenstack 1 ist die Abgasleitung 4 zu erkennen.

In der Abgasleitung 4 wird an der Stelle 5, die sich direkt im Anschluß an den Brennstoffzellenstack 1 befindet, der Sauerstoff-Partialdruck (P_{O2}) mit einer Sonde 6 gemessen. Die Sonde 6 ist über die Leitung 7 an die Steuerungselektronik 8 (gestrichelt gezeichnet) angeschlossen. In der Steuerungselektronik 8 fließen folgende Informationen zusammen:
- der Fahrerwunsch 10,
- die Daten aus der Außentemperatur und Umgebungsdruckmessung 9, die einfach aus der Luftzuführleitung 2 vor dem Verdichter entnommen werden können,
- der momentan zugeführte Luftmassenstrom 12, der an der Stelle 11 der Prozeßgaszuführleitung 2 gemessen wird und
- der Sauerstoff-Partialdruck 13 in der Kathodenabluft, der an der Stelle 5 mit der Sonde 6 gemessen wird.

Die Steuereinheit 14 berechnet aus diesen Informationen den Korrekturwert x, der besagt, ob die Luftzufuhr erhöht oder gedrosselt werden soll. Über den Verdichter 3, dessen Motor mit Drehzahlregelung 15 an die Steuereinheit 14 angeschlossen ist, wird dann der Luftmassenstrom, der dem Brennstoffzellenstack 1 zugeführt wird, entsprechend reguliert.

Somit ist es erstmals möglich, einfach und direkt die Leistung eines z.B. luftbetriebenen Brennstoffzellenstacks über die Messung des O₂-Partialdrucks im Abgas wirkungsvoll zu steuern.

Die Erfindung bezieht sich bevorzugt auf die mobile Anwendung der PEM-Brennstoffzelle, insbesondere im Fahrzeugbau, wobei auch stationäre Anwendungen denkbar sind.

## Patentansprüche

1. Verfahren zur Leistungsregelung eines Brennstoffzellenstacks, dem Brenngas und Luft als Prozeßgase in einer Leitung zugeführt werden, wobei der Partialdruck eines Reaktionsgases gemessen wird und eine Leistungsvorgabe mit der tatsächlich abgegebenen Leistung des Brennstoffzellenstacks dadurch verglichen wird, dass der im Prozeßgas vorhandene Partialdruck an Reaktionsgas mit der Leistung korreliert und die Menge an zugeführtem Prozeßgas entsprechend den Vorgaben eingestellt wird , **dadurch gekennzeichnet, dass** der Sauerstoffpartialdruck in der Kathodenabluft gemessen und als. Referenzgröße für die Einstellung des zuzuführenden Prozeßgasmassenstroms dient, wobei über eine Steuereinheit der zugeführte Luftmassenstrom entsprechend eingestellt wird.

2. Vorrichtung zur Durchführung des Verfahrens nach Anspruch 1, mit einem Brennstoffzellenstack (1) und einer Prozessgasleitung (2), wobei eine Sonde (6) zur Messung des Partialdruckes eines Reaktionsgases vorhanden ist, **dadurch gekennzeichnet, dass** zur Messung des Sauerstoffpartialdruckes der Kathodenabluft als Reaktionsgas die Sonde (6) in der Kathodenabgasleitung (4) angeordnet ist und dass zur Einstellung des Luftmassenstroms in Abhängigkeit vom Sauerstoffpartialdruck des Kathodenabgases eine Steuereinheit (8, 14) vorhanden ist.

3. Vorrichtung nach Anspruch 2, **dadurch gekennzeichnet, dass** die Steuereinheit (14) Teil einer Steuerungselektronik (8) mit Dateneingabeeinheiten (9 bis 13) ist, von denen zumindest eine die Reaktionsgas-Partialdruckmessung (13) umfasst.

4. Verwendung eines Verfahrens nach Anspruch 1 zur Leistungsregelung einer Antriebseinheit eines Elektrofahrzeugs.

5. Verwendung nach Anspruch 4, mit einer Vorrichtung nach Anspruch 3, wobei die Vorrichtung der Antriebseinheit des Elektrofahrzeuges zugeordnet ist, **dadurch gekennzeichnet, daß** die Steuereinheit (14) die Vorgabe (10) durch den Fahrer, die Daten (9) von aus der Außentemperatur- und Umgebungsdruckmessung sowie die Daten (12) des dem Brennstoffzellenstack (1) momentan zugeführten Luftmessestroms berücksichtigt und dass zusammen mit den Daten (13) des Sauerstoffpartialdruckes im Abgas ein Motor (15) für einen Luftverdichter (3) für das mit Luft als Oxidans betriebene Brennstoffzellenstack (1) drehzahlgeregelt wird.

## Claims

1. Method for controlling the power of a fuel cell stack, to which fuel gas and air are supplied as process gases in a line, the partial pressure of a reaction gas being measured and a pre-set power being compared with the power which is actually emitted by the fuel cell stack by correlating the reaction gas partial pressure which is present in the process gas to the power and setting the quantity of process gas supplied according to the pre-set stipulations, **characterized in that** the oxygen partial pressure in the cathode exhaust air is measured and is used as reference variable for setting the mass flow rate of process gas to be supplied, the mass flow rate of air supplied being set accordingly by means of a control unit.

2. Device for carrying out the method according to Claim 1, having a fuel cell stack (1) and a process gas line (2), a probe (6) for measuring the partial pressure of a reaction gas being present, **characterized in that** to measure the oxygen partial pressure in the cathode exhaust air as a reaction gas, the probe (6) is arranged in the cathode exhaust-gas line (4), and **in that** to set the mass flow rate of air as a function of the oxygen partial pressure of the cathode exhaust gas there is a control unit (8, 14).

3. Device according to Claim 2, **characterized in that** the control unit (14) is part of control electronics (8) with data input units (9 to 13) at least one of which includes the reaction gas partial pressure measurement (13).

4. Use of a method according to Claim 1 for controlling the power of a drive unit of an electric vehicle.

5. Use according to Claim 4, with a device according to Claim 3, in which the device is assigned to the drive unit of the electric vehicle, **characterized in that** the control unit (14) takes account of the pre-set stipulations (10) from the driver, the data (9) from the external temperature and environmental pressure measurement and the data (12) relating to the mass flow rate of air which is instantaneously being supplied to the fuel cell stack (1), and **in that** together with the data (13) relating to the oxygen partial pressure in the exhaust gas, the speed of a motor (15) for an air compressor (3) for the fuel cell stack (1), which is operated with air as oxidizing agent, is controlled.

## Revendications

1. Procédé de régulation de la puissance d'un empilement de piles à combustible auquel est apporté, par un conduit, du gaz combustible et de l'air en tant que gaz du processus, dans lequel on mesure la pression partielle d'un gaz de réaction et on compare ainsi une prescription de puissance à la puissance fournie réellement de l'empilement de piles à combustible, on corrèle à la puissance la pression partielle du gaz de réaction présent dans le gaz de processus et on règle la quantité de gaz de processus apportée en fonction des prescriptions, **caractérisé en ce que** l'on mesure la pression partielle de l'oxygène dans l'air d'échappement de la cathode et on s'en sert pour le réglage du courant massique du gaz de processus à apporter en réglant en conséquence, par une unité de commande, le courant massique d'air qui est apporté.

2. Dispositif pour la mise en oeuvre du procédé suivant la revendication 1, comprenant un empilement (1) de piles à combustible et un conduit (2) pour du gaz de processus, une sonde (6) de mesure de la pression partielle d'un gaz de réaction étant présente, **caractérisé en ce que**, pour la mesure de la pression partielle de l'oxygène dans l'air d'échappement de la cathode servant de gaz de réaction, la sonde (6) est montée dans le conduit (4) d'échappement des gaz de la cathode et **en ce que**, pour régler le courant massique d'air en fonction de la pression partielle d'oxygène du gaz d'échappement de la cathode, il est prévu une unité (8, 14) de commande.

3. Dispositif suivant la revendication 2, **caractérisé en ce que** l'unité (14) de commande fait partie d'une électronique (8) de commande ayant des unités (9 à 13) d'entrée de données, parmi lesquelles l'une au moins comprend le dispositif (13) de mesure de la pression partielle du gaz de réaction.

4. Utilisation d'un procédé suivant la revendication 1 pour réguler la puissance d'une unité d'entraînement d'un véhicule automobile électrique.

5. Utilisation suivant la revendication 4, comprenant un dispositif suivant la revendication 3, le dispositif étant associé à l'unité d'entraînement du véhicule automobile électrique, **caractérisée en ce que** l'unité (14) de commande prend en compte la prescription (10) par le conducteur, les données (9) du dispositif de mesure de la température extérieure et de la pression ambiante, ainsi que les données (12) du courant massique d'air apporté instantanément à l'empilement (1) de piles à combustible, et **en ce que**, ensemble avec les données (13) de la pression partielle d'oxygène dans le gaz d'échappement, un moteur (15) d'un compresseur (3) d'air pour l'empilement (1) de piles à combustible alimenté en air en tant qu'oxydant est régulé en vitesse de rotation.
